# EUROPÄISCHE PATENTSCHRIFT

(11) **EP 1 360 588 B1**
(45) Veröffentlichungstag und Bekanntmachung des Hinweises auf die Patenterteilung: **02.05.2007**
(21) Anmeldenummer: 02701181.6
(22) Anmeldetag: 10.01.2002
(51) Int. Cl.: G06F 9/44

(54) **VERFAHREN ZUR AUTOMATISCHEN ERGÄNZUNG VON SOFTWARE**
METHOD FOR THE AUTOMATIC UPDATING OF SOFTWARE
PROCEDE POUR COMPLETER AUTOMATIQUEMENT DES LOGICIELS

(30) Priorität: 07.02.2001 DE 10105454
(43) Veröffentlichungstag der Anmeldung: 12.11.2003
(73) Patentinhaber: ROBERT BOSCH GMBH, 70442 Stuttgart (DE)
(72) Erfinder: DE BOER, Gerrit, 31139 Hildesheim (DE); DOMINGUEZ LORENZO, Oliver, E-08914 Badalona (ES)
(86) Internationale Anmeldenummer: PCT/DE2002/000051
(87) Internationale Veröffentlichungsnummer: WO 2002/063464

(56) Entgegenhaltungen:
- EP-A- 0 848 341
- US-A- 5 410 703
- US-A- 5 493 682
- US-A- 5 699 275

## Beschreibung

### Stand der Technik

Die Erfindung geht aus von einem Verfahren zur automatischen Ergänzung von Software nach der Gattung des unabhängigen Patentanspruchs. Ein solches Verfahren ist durch US-A-5,410,703 bekannt.

Es ist bereits bekannt, im Betrieb befindliche Software durch Softwaremodule zu ergänzen. Um diese Softwaremodule zu testen, ist der Einsatz von sogenannten Testvektoren bekannt, die eine abgeschirmte Testumgebung verlangen.

Aus der US 5,410,703 ist bekannt, dass in Telekommunikations-Vermittlungssystemen die Software häufig verändert, erweitert oder durch neue Versionen ersetzt werden muss. Die Umsetzung oder Integration der neuen oder überarbeiteten Software in das laufende System muß so geschehen, dass der laufende Betrieb des Systems nicht gestört wird. Daher ist es wünschenswert, dass der Betrieb des Systems nicht unterbrochen wird, solange der Wechsel auf die neue Software vollzogen wird. Daher ist es vorgesehen, dass neue Softwaremodule mit neuen Versionen während des laufenden Betriebs ersetzt werden. Die reibungslose Veränderung, gemäß dem beschriebenen System erlaubt derartige Veränderungen mit nur minimaler Beeinträchtigung der laufenden Prozesse. Das beschriebene System hat die Fähigkeit, Software während dem Betrieb zu wechseln, indem die dynamischen Prozesse eines Telekommunikationssystems als eine Menge paralleler, unabhängiger Prozesse behandelt wird, wobei jeder Prozeß aus einer Abfolge miteinander verbundener Aktivitäten besteht. Ein derartiger Prozess ist ein funktioneller Bestandteil, der mit einem speziellen Anwender verbunden ist, beispielsweise ein Fernsprechteilnehmer oder ein Betreiber, sowie ein Anruf, der verarbeitet wird oder ein Eingabebefehl, der vom System ausgeführt wird.

Aus der US 5,699,275 ist ein System zur ferngesteuerten Korrektur oder Aktualisierung von Programmcode in einer Mobileinheit bekannt. Das System umfasst einen Hauptcomputer und eine Mobileinheit. Der Hauptcomputer kann eine Übertragung mindestens einer Patchnachricht über ein Kommunikationsnetzwerk auslösen, wobei diese Patchnachricht mindestens einen Patch umfasst. Die Mobileinheit empfängt diese Patchnachricht und erzeugt hieraus Programmcode indem dieser Patch mit laufendem Programmcode in der Mobileinheit zusammengeführt wird und in Betrieb genommen wird.

### Vorteile der Erfindung

Das erfindungsgemäße Verfahren zur automatischen Ergänzung von Software mit den Merkmalen des unabhängigen Patentanspruchs hat demgegenüber den Vorteil, dass diese Ergänzung abgeschirmt von dem Benutzer während des Betriebs mit einem Test durchgeführt wird. Dadurch werden insbesondere Unterbrechungen des Betriebs bei dem Erneuern der Software vermieden. Weiterhin ist es von Vorteil, dass von dem Softwaremodul, das zum Test verwendet wird, wenigstens ein Applikationsmodul abgeleitet wird, das dann in der Software letztlich zum Einsatz kommt. Dies spart Code sowie Ressourcen und führt zu einem schnelleren Laden des Softwaremoduls.

Darüber hinaus ist es von Vorteil, dass dieser Test beliebig skalierbar ist. Außerdem ist der Test immer wieder wiederholbar, ohne den Betrieb der Software zu stören. Der Test wird insbesondere vor der Verwendung von neuen Applikationsmodulen durchgeführt, so dass der Einsatz nur von getesteten Applikationsmodulen stattfindet. Das erfindungsgemäße Verfahren vereinfacht auch die schrittweise Erweiterung der Software, ohne dass es zu Beeinträchtigungen für einen Nutzer kommt. Der Test ist weiterhin durch eine Applikation, die aufgerufen wird, steuerbar und schont damit die Systemverwaltung.

Es ist weiterhin von Vorteil, dass das erfindungsgemäße Verfahren die Verwendung des aus der objektorientierten Programmierung bekannten Vererbungsprinzips vorsieht. Mit diesem Vererbungsprinzip können von den Softwaremodulen, die neu empfangen werden, die Applikationsmodule in einfacher Weise abgeleitet werden. Zusätzlich können dann den Applikationsmodulen Funktionen hinzugefügt werden, die nicht getestet werden müssen. Dazu zählen z.B. Zugriffe auf Ausgabemedien wie Bildschirme oder Lautsprecher.

Durch die in den abhängigen Ansprüchen aufgeführten Maßnahmen und Weiterbildungen sind vorteilhafte Verbesserungen des im unabhängigen Patentanspruch angegebenen Verfahrens zur Ergänzung von Software möglich.

Besonders vorteilhaft ist, dass das Softwaremodul, mit dem die Software ergänzt wird, über eine Funkschnittstelle empfangen wird. Damit ist das erfindungsgemäße Verfahren vorteilhafterweise für den mobilen Empfang geeignet. Beispielsweise kann das Softwaremodul über ein digitales Rundfunkübertragungsverfahren wie es DAB (Digital Audio Broadcasting) ist, empfangen werden und wird dann der Rundfunk-Empfängersoftware hinzugefügt. Das erfindungsgemäße Verfahren ist jedoch nicht auf Rundfunkempfänger beschränkt, sondern kann auch für Rundfunksender oder alle anderen Systeme verwendet werden, die Software einsetzen, die ergänzbar ist und die eine Ladevorrichtung aufweisen wie beispielsweise eine Funkschnittstelle. Es muß also eine Schnittstelle zur Außenwelt bestehen. Das erfindungsgemäße Verfahren ist damit vor allem für Plattform-unabhängige Software anwendbar, wobei jedoch auf ein Compilieren, also die Erzeugung eines lauffähigen Codes, verzichtet werden soll. Es ist alternativ möglich, ein erfindungsgemäßen Softwareupdate auch über einen drahtgebundenen Zugang durchzuführen. Beispiele dafür sind vernetzte Rechner.

Weiterhin ist es von Vorteil, dass bei der Ableitung des wenigstens einen Applikationsmoduls aus dem Softwaremodul Test-eigene Funktionen überschrieben werden. Das sind dann solche Funktionen, die nur für den Test geeignet sind, aber für den normalen Betrieb nicht notwendig oder unzureichend sind. Beispielsweise wird während dem Test nicht das Schreiben in eine Datei getestet, sondern nur das Prüfen des Zugriffrechts auf das Schreiben.

Der Test des Softwaremoduls wird vorteilhafterweise durch einen Aufruf mit Testparametern durchgeführt. Testparameter legen damit fest, in welchen Situationen das Softwaremodul getestet wird. Damit können insbesondere kritische Situationen getestet werden, auch wenn diese Situationen nur mit einer geringen Wahrscheinlichkeit auftreten werden.

Darüber hinaus ist es von Vorteil, dass die Software den Test des Softwaremoduls durch das Setzen einer Variablen überwacht und in Abhängigkeit vom Inhalt dieser Variable den Test wiederholt. Somit kann auch ein zufällig fehlerhafter Test durch ein wiederholtes Durchführen des Tests verifiziert oder widerlegt werden.

Schließlich ist es auch von Vorteil, dass eine Vorrichtung zur Durchführung des Verfahrens vorliegt, die einen Prozessor, auf dem die Software abläuft und der das erfindungsgemäße Verfahren durchführt, und einen Speicher zum Zwischenspeichern oder permanenten Abspeichern von Daten aufweist, sowie eine Ladevorrichtung, die zum Laden des Softwaremoduls ausgebildet ist. Als Ladevorrichtung kann vorteilhafterweise eine Funkschnittstelle verwendet werden, so dass über Funksignale das Softwaremodul empfangbar ist. Dabei ist es insbesondere von Vorteil, dass die Vorrichtung sich in einem Fahrzeug befindet, um so Software des Fahrzeugs für die verschiedenen Komponenten zu erneuern bzw. zu ergänzen. Dies setzt dann voraus, dass die Komponenten im Fahrzeug miteinander vernetzt sind. Dazu kann beispielsweise ein Bussystem verwendet werden, über das dann die Softwaremodule auf die einzelnen Komponenten verteilt werden. Bei zeitkritischen Fahrzeugkomponenten wie einem Antiblockiersystem (ABS) ist es dann natürlich notwendig, dass die Ergänzung der Software während des Betriebs erfolgen kann. Ein Unterbrechen der Funktionsweise des ABS-Systems ist nicht akzeptabel, so dass hier das erfindungsgemäße Verfahren insbesondere geeignet ist.

### Zeichnung

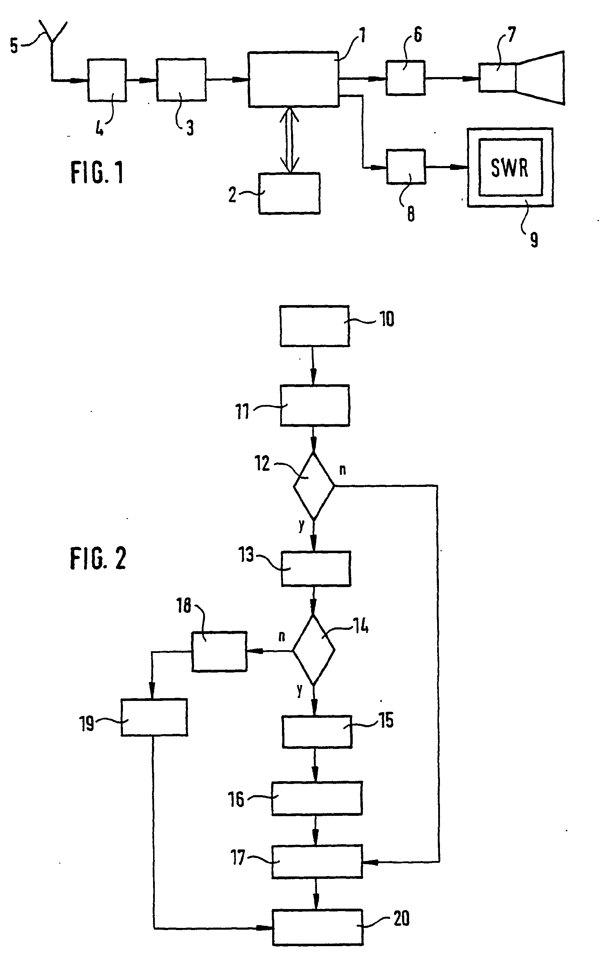

Ausführungsbeispiele der Erfindung sind in der Zeichnung dargestellt und werden in der nachfolgenden Beschreibung näher erläutert. Es zeigt Figur 1 ein Blockschaltbild einer erfindungsgemäßen Vorrichtung, hier ein Rundfunkempfänger und Figur 2 ein Flußdiagramm des erfindungsgemäßen Verfahrens.

### Beschreibung

Durch die weitere Verbreitung von Prozessoren in immer mehr Systemen, beispielsweise in Fahrzeugsystemen, und durch die immer größere Leistungsfähigkeit dieser Systeme wird es notwendig, die Software auf diesen Prozessorsystemen regelmäßig zu ergänzen bzw. zu ersetzen. Viele dieser Systeme, beispielsweise im Fahrzeug, sind miteinander vernetzt und weisen eine Schnittstelle zur Außenwelt, beispielsweise eine Funkschnittstelle über einen Rundfunkempfänger oder ein Mobiltelephon, auf. Auch Systeme wie Überwachungseinrichtungen oder Haustechniksysteme sind miteinander vernetzt und weisen Schnittstellen auf, die entweder als Funkschnittstellen ausgebildet sind oder über Draht gebundene Kommunikationswege mit der Außenwelt verbunden sind. Über diese Schnittstellen können dann neue Softwaremodule empfangen werden und auf die entsprechenden Systeme gebracht werden, um so die Software zu erneuern. Um Sicherheitsaspekten, wie dem Zugriff auf diese Systeme, Rechnung zu tragen, ist es notwendig, dass die Funktionalität des neuen Softwaremoduls überprüft wird, so dass das System, die laufende Software, darunter nicht leidet, also durch das neue Softwaremodul nicht geschädigt wird. Bei laufenden Systemen wie einem Fahrzeug ist es notwendig, dass dieser Software-Update während des Betriebs möglich ist. Damit muss auch ein Testen dieser neuen Softwaremodule abgeschirmt vom Nutzer stattfinden. Erfindungsgemäß wird daher dieses neue Softwaremodul während des Betriebs der Software getestet, wobei dann in Abhängigkeit vom Ergebnis des Tests wenigstens ein Applikationsmodul abgeleitet wird und das Applikationsmodul von der Software zum Betrieb verwendet wird.

Figur 1 zeigt ein Blockschaltbild einer erfindungsgemäßen Vorrichtung zur Durchführung des erfindungsgemäßen Verfahrens zur automatischen Ergänzung von Software. Hier wird beispielhaft ein Rundfunkempfänger gezeigt, es ist jedoch auch möglich, dass jedes andere System, das eine Schnittstelle nach außen aufweist und mit einer Software betrieben wird, zur Durchführung des erfindungsgemäßen Verfahrens verwendet wird. Beispielsweise vernetzte Haushaltsgeräte oder Satelliten oder andere isolierte Systeme mit wenigstens einer Schnittstelle.

Eine Antenne 5 ist an einen Eingang eines Hochfrequenzempfängers 4 angeschlossen. Ein Datenausgang des Hochfrequenzempfängers 4 ist an einen Dateneingang einer Signalverarbeitung 3 angeschlossen. Die Signalverarbeitung 3 ist wiederum an einen Dateneingang eines Prozessors 1 angeschlossen. Der Prozessor 1 ist über einen Daten-Ein/Ausgang mit einem Speicher 2 verbunden. Über einen ersten Datenausgang ist der Prozessor 1 mit einer Signalverarbeitung 6 verbunden. Über einen zweiten Datenausgang ist der Prozessor mit einer Signalverarbeitung 8 verbunden. Die Signalverarbeitung 6 weist einen Ausgang zu einem Lautsprecher 7 auf. Die Signalverarbeitung 8 weist einen Ausgang zu einer Anzeige 9 auf.

Auf dem Prozessor 1 läuft eine Software zum Betrieb des Rundfunkempfängers, die im Speicher 2 abgespeichert ist. Der Speicher 2 dient weiterhin zur Zwischenspeicherung von Zwischenergebnissen, die während des Ablaufs der Software auftreten. Der Speicher 2 wird also sowohl als permanenter als auch als temporärer Speicher verwendet. Dabei kann es sein, dass der Speicher 2 verschiedene physikalische Medien aufweist, beispielsweise einen Halbleiterspeicher für die temporäre Speicherung und einen Magnetspeicher, beispielsweise eine Festplatte, für die permanente Speicherung. Ein neues Softwaremodul wird nun mittels Rundfunksignalen, die hier digital sind, über die Antenne 5 empfangen. Als digitale Rundfunk-Übertragungsverfahren zur Übertragung von Daten sind insbesondere DAB (Digital Audio Broadcasting) aber auch DVB (Digital Video Broadcasting), DRM (Digital Radio Mondiale) und andere digitale Rundfunk-Übertragungsverfahren geeignet, da bei diesen Rundfunkübertragungsverfahren neben den eigentlichen Audioprogrammen und gegebenenfalls Fernsehprogrammen auch andere Multimediadaten oder Textdaten übertragbar sind. Diese Rundfunkübertragungsverfahren sind vergleichsweise breitbandig, so dass eine Übertragung von zusätzlichen Daten neben den eigentlichen Rundfunkprogrammen leicht möglich ist, und sie weisen eine Rahmenstruktur auf, die fast beliebige Datenformate zu übertragen gestattet. Zu diesen Daten gehören auch Softwareteile wie das Softwaremodul, das der Software, die auf dem Prozessor 1 läuft, hinzugefügt werden soll.

Im Hochfrequenzempfänger 4 werden dann die digitalen Rundfunksignale gefiltert, verstärkt und in eine Zwischenfrequenz umgesetzt. Dann folgt eine Digitalisierung der empfangenen Rundfunksignale. Der so entstandene digitale Datenstrom wird dann an die Signalverarbeitung 3 übertragen, die eine Kanal- und Quellendekodierung durchführt. Die Nutzdaten aus dem digitalen Datenstrom werden dann an den Prozessor 1 übertragen. Es kann alternativ sein, dass die Aufgaben der Signalverarbeitung 3 auf den Prozessor 1 und den Hochfrequenzempfänger 4 verteilt werden. Weiterhin ist es möglich, dass die Analogdigitalwandlung von dem Hochfrequenzempfänger 4 auf die Signalverarbeitung 3 übertragen wird.

Der Prozessor 1 verarbeitet nun die empfangenen Daten und führt sie gegebenenfalls den Wiedergabemitteln, dem Lautsprecher 7 und der Anzeige 9, zu. Durch eine entsprechende Dekodierung entdeckt der Prozessor 1, dass sich auch das Softwaremodul zur Erneuerung der eigenen Software unter den Daten befindet. Dieses Softwaremodul wird nun während des Betriebs der eigentlichen Software getestet. Dazu wird ein Objekt aufgerufen, das das Softwaremodul anwenden möchte. Verbessert beispielsweise das Softwaremodul die Ansteuerung der Anzeige 9, dann ruft der Prozessor 1 ein Objekt auf, das eine Anzeige von Daten durchführt.

Mit Testparametern wird dann ein Test des Softwaremoduls durchgeführt. Ist der Test erfolgreich, wird eine entsprechende Variable im Speicher 2 gesetzt, und von dem Softwaremodul wird wenigstens ein Applikationsmodul abgeleitet, das dann die neuen Funktionen ausführt. Dann wird dieses Applikationsmodul durch das Objekt ausgeführt und steht auch später immer wieder zur Verfügung. Der Test ist wiederholbar, beispielsweise wenn ein erster Testdurchlauf negativ abläuft.

Bei der Ableitung des wenigstens einen Applikationsmoduls können Test-eigene Funktionen im Softwaremodul überschrieben werden. Die Ableitung wird durch das aus der Informatik bekannte Prinzip der Vererbung durchgeführt.

In Figur 2 ist als Flußdiagramm das erfindungsgemäße Verfahren zur automatischen Ergänzung von Software dargestellt. In Verfahrensschritt 10 wird die Software auf dem Prozessor 1 gestartet. In Verfahrensschritt 11 wird ein neues Softwaremodul über die Antenne 5 empfangen und dem Prozessor 1 als Datenstrom übergeben. Durch einen Aufruf eines Objekts, das dieses Softwaremodul benötigt, wird nun erkannt, dass dieses Softwaremodul neu ist und gegebenenfalls ein Test notwendig ist. Im Verfahrensschritt 12 wird nun überprüft, ob dieser Test notwendig ist. Ist das der Fall, wird in Verfahrensschritt 13 ein Test des Softwaremoduls mit Testparametern durchgeführt. Wurde in Verfahrensschritt 14 erkannt, dass dieser Test positiv verlaufen ist, dann wird in Verfahrensschritt 15 eine Variable im Speicher 2 gesetzt, dass der Test in Ordnung war. Im Verfahrensschritt 16 wird nun von dem Softwaremodul wenigstens ein Applikationsmodul abgeleitet, das dann von der Software zur Durchführung der neuen Funktion verwendet wird. In Verfahrensschritt 17 wird dann die Anwendung mit diesem neuen Applikationsmodul gestartet. Wurde in Verfahrensschritt 14 erkannt, dass der Test negativ verlaufen ist, dann wird in Verfahrensschritt 18 die Variable im Speicher 2 entsprechend gesetzt und im Verfahrensschritt 19 wird das Testergebnis ausgegeben, beispielsweise auf der Anzeige 9. Verfahrensschritt 20 beendet das Verfahren. Wurde in Verfahrensschritt 12 erkannt, dass kein Test notwendig ist, dann wird sofort zu Verfahrensschritt 17 gesprungen, um die Anwendung zu starten. Dann kann sofort mit dem Softwaremodul die Applikation gestartet werden, da dann ein Ableiten nicht mehr notwendig ist.

Wie dargestellt, ist das Prinzip der Vererbung geeignet, um aus dem Softwaremodul wenigstens ein Applikationsmodul abzuleiten. Als besonders wichtig hat sich dabei die objektorientierte Sprache JAVA gezeigt. Hier werden auch JAVA-Quellcode, sogenannte Klassendateien, erzeugt, die dann auf jedem System mit einer sogenannten JAVA-virtuellen Maschine lauffähig sind. Die durch eine solche Klasse implementierten Funktionen und Routinen werden auch als Methoden bezeichnet.

Ein wesentliches Merkmal des Verfahrens ist die Nutzung der Vererbungseigenschaft zur Vermeidung von Mehrfachübertragung von Codes. Den Klassen der bestehenden tatsächlichen Software werden eine oder mehrere Klassen mit entsprechenden Test-Routinen zugeordnet. Es werden für die Installation der Software dann alle Klassen, im einfachsten Fall zwei, Testklasse und Applikationsklasse, geladen. Die Testklasse beinhaltet alle auf dem Zielsystem testbaren Methoden der Applikation, beispielsweise Dateizugriffsberechtigungen sowie zusätzliche Testmethoden, mit denen im Betrieb auftretende kritische Situationen vorab überprüft werden sollen. Dies wird wie oben dargestellt durch Testaufrufe der Basismethoden mit entsprechenden Testparametern erreicht. Da in der Testklasse im wesentlichen die Grundfunktionalitäten der Applikationsklasse definiert sind, wäre für diese Klasse auch der Begriff Basisklasse zutreffend.

Die eigentliche Applikationsklasse wird durch Vererbung aus dieser Klasse erzeugt. Sie verfügt damit über alle Methoden der Testklasse und wird ergänzt durch zusätzliche Methoden, die auf dem Zielsystem nicht testbar sind oder nicht getestet werden sollen. In dieser Klasse können auch Methoden aus der Testklasse überschrieben werden, die in letzterer aus Gründen zur Durchführung des Tests eventuell nicht vollständig oder nur modifiziert implementiert wurden. Die Applikationsklasse startet weiterhin den in der Testklasse definierten Test, falls dies erforderlich sein sollte. Die Erfindung ist dadurch gekennzeichnet, dass Applikationsklasse und Testklasse durch die Vererbung einander logisch zugeordnet sind, wobei die Applikationsklasse (Applikationsmodul) die Methoden der Testklasse (Softwaremodul) in weitem Maße wieder verwendet. Hierdurch wird Code eingespart, was verglichen mit zusätzlich geladenen unabhängigen Testmodulen die Zeit zum Laden der Software herunter setzt als auch die Systemressourcen schont. Eine vererbte Klasse erbt Eigenschaften wie Variablen und Funktionen von der vererbenden Klasse. Dies spart die unnötige Wiederholung von Programmcode.

## Patentansprüche

1. Verfahren zur automatischen Ergänzung von bestehender objekt-orientiert implementierter Software, wobei die Software um ein Softwaremodul, bestehend aus Testklasse und Applikationsklasse, ergänzt wird und die Testklasse während des Betriebs der bestehenden Software an Hand der implementierten Testroutinen der Testklasse automatisch getestet wird, **dadurch gekennzeichnet, dass** aus der Testklasse wenigstens eine Applikationsklasse nach dem Vererbungsprinzip der objektorientierten Programmierung abgeleitet wurde und dass die Applikationsklasse von der Software in Abhängigkeit von einem Ergebnis des Tests zum Betrieb verwendet wird.

2. Verfahren nach Anspruch 1, **dadurch gekennzeichnet, dass** die Testklasse über eine Funkschnittstelle empfangen wird.

3. Verfahren nach Anspruch 1 oder 2, **dadurch gekennzeichnet, dass** bei der Ableitung der wenigstens einen Applikationsklasse aus der Testklasse testeigene Funktionen überschrieben werden.

4. Verfahren nach Anspruch 1, 2 oder 3, **dadurch gekennzeichnet, dass** die Testklasse durch einen Aufruf mit Testparametern getestet wird.

5. Verfahren nach einem der vorhergehenden Ansprüche, **dadurch gekennzeichnet, dass** die Software den Test der Testklasse durch das Setzen einer Variablen überwacht und in Abhängigkeit vom Inhalt der Variablen den Test wiederholt.

6. Vorrichtung mit Programmcodemitteln die zur Durchführung des Verfahrens nach einem der Ansprüche 1 bis 5 eingerichtet sind, **dadurch gekennzeichnet dass** die Vorrichtung in einem Fahrzeug vorhanden ist, einen Prozessor (1) und einen Speicher (2) zum Betrieb der Software und eine Ladevorrichtung (5) zum gleichzeitigen Laden der Testklasse und zum Empfang der Nutzdaten aufweist sowie ein Anschluß an ein Bussystem vorhanden ist, über das die Testklassen auf die einzelnen Fahrzeugkomponenten verteilt werden um so Software des Fahrzeugs für die verschiedenen Komponenten zu erneuern bzw. zu ergänzen.

7. Vorrichtung nach Anspruch 6, **dadurch gekennzeichnet, dass** die Ladevorrichtung als Funkschnittstelle (5) ausgebildet ist.

## Claims

1. Method for automatically expanding existing software implemented on an object-oriented basis, where the software is expanded by a software module, comprising a test class and an application class, and the test class is automatically tested using the implemented test routines from the test class during operation of the existing software, **characterized in that** at least one application class has been derived from the test class on the basis of the inheritance principle of object-oriented programming, and **in that** the application class is used by the software on the basis of a result from the test for the purpose of operation.

2. Method according to Claim 1, **characterized in that** the test class is received via a radio interface.

3. Method according to Claim 1 or 2, **characterized in that** test-inherent functions are overwritten when the at least one application class is derived from the test class.

4. Method according to Claim 1, 2 or 3, **characterized in that** the test class is tested by a call with test parameters.

5. Method according to one of the preceding claims, **characterized in that** the software monitors the test from the test class by setting a variable and repeats the test on the basis of the content of the variable.

6. Apparatus with program code means which are set up to carry out the method according to one of Claims 1 to 5, **characterized in that** the apparatus is present in a vehicle, has a processor (1) and a memory (2) for operating the software, and a loading apparatus (5) for simultaneously loading the test class and for receiving the useful data, and there is also a connection to a bus system which can be used to distribute the test classes over the individual vehicle components in order to refresh or expand software in the vehicle for the various components in this manner.

7. Apparatus according to Claim 6 **characterized in that** the loading apparatus is in the form of a radio interface (5).

## Revendications

1. Procédé permettant de compléter automatiquement les logiciels mis en oeuvre orientés objet existants, le logiciel étant complété d'un module de logiciel comportant une classe de test et une classe d'application, et dont la classe de test est testée automatiquement pendant le fonctionnement du logiciel existant à l'aide des routines de test mises en oeuvre de la classe de test,
**caractérisé en ce qu'**
au moins une classe d'application est dérivée de la classe de test selon le principe d'héritage de la programmation orientée objet, et la classe d'application est utilisée par le logiciel pour le fonctionnement en fonction d'un résultat du test.

2. Procédé selon la revendication 1,
**caractérisé en ce que**
la classe de test est reçue par une interface radio.

3. Procédé selon la revendication 1 ou 2,
**caractérisé en ce que**
les fonctions propres au test sont écrasées lors de la dérivation d'au moins une classe d'application de la classe de test.

4. Procédé selon la revendication 1, 2 ou 3,
**caractérisé en ce que**
la classe de test est testée par un appel avec des paramètres d'essai.

5. Procédé selon l'une quelconque des revendications précédentes,
**caractérisé en ce que**
le logiciel surveille le test de la classe de test par le placement d'une variable et répète le test en fonction du contenu des variables.

6. Dispositif comportant des moyens de code de programme prévus pour la réalisation du procédé selon l'une quelconque des revendications 1 à 5,
**caractérisé en ce que**
le dispositif disponible dans un véhicule, présente un processeur (1) et un accumulateur (2) permettant de faire fonctionner le logiciel et un dispositif de chargement (5) permettant de charger simultanément la classe de test et de recevoir les données utiles, et on moyen de raccordement à un système de bus est disponible, pour répartir les classes de test sur les composants de véhicule individuels et ainsi renouveler ou compléter les logiciels du véhicule pour les différents composants.

7. Dispositif selon la revendication 6,
**caractérisé en ce que**
le dispositif de chargement est une interface radio (5).
